(19) Europäisches Patentamt
European Patent Office
Office européen des brevets

(11) **EP 4 685 583 A1**

(12) **EUROPEAN PATENT APPLICATION**
published in accordance with Art. 153(4) EPC

(43) Date of publication:
**28.01.2026 Bulletin 2026/05**

(21) Application number: **24774567.2**

(22) Date of filing: **21.02.2024**

(51) International Patent Classification (IPC):
**G05B 13/02** *(2006.01)*    **H02P 29/00** *(2016.01)*

(52) Cooperative Patent Classification (CPC):
**G05B 13/02; H02P 29/00**

(86) International application number:
**PCT/JP2024/006386**

(87) International publication number:
**WO 2024/195422 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023   JP 2023043727**

(71) Applicant: **Panasonic Intellectual Property
Management Co., Ltd.
Kadoma-shi, Osaka 571-0057 (JP)**

(72) Inventors:
• **TOSHIHIRO, Shunsaku
Osaka 571-0057 (JP)**
• **KAI, Koushin
Osaka 571-0057 (JP)**
• **FUJIWARA, Hiroshi
Osaka 571-0057 (JP)**

(74) Representative: **SSM Sandmair
Patentanwälte Rechtsanwalt
Partnerschaft mbB
Joseph-Wild-Straße 20
81829 München (DE)**

(54) **ADJUSTMENT ASSISTANCE METHOD AND ADJUSTMENT ASSISTANCE SYSTEM**

(57)    A control parameter is efficiently adjusted. An adjustment assistance method includes the following steps. (a)A step of driving a drive target under a plurality of operation conditions using a control parameter (S203). (b)A step of calculating a plurality of evaluation values (S204). (c)A step of determining a representative evaluation value from among the plurality of evaluation values (S206). (d)A step of changing the control parameter based on the representative evaluation value (S207). (e)A step of repeating (a) to (d) using the control parameter changed in (d). (f)A step of ending the adjustment of the control parameter on condition that the representative evaluation value has reached a target performance value. (S212) (g)When the representative evaluation value has not reached the target performance value, a step of the adjustment of the control parameter is interrupted on condition that adjustment time of the control parameter has reached predetermined set time or the number of times of change of the control parameter has reached a predetermined set number of times (S214).

FIG. 1

**Description**

TECHNICAL FIELD

The present disclosure relates to an adjustment assistance method and an adjustment assistance system.

BACKGROUND ART

Systems for adjusting control parameters of motors are known (see, for example, PTL 1). In this system, an evaluation operation for calculating an evaluation value relating to performance of a motor is repeatedly performed by operating the motor using control parameters. The control parameters are changed every time the evaluation operation is repeated, and the evaluation operation is ended when a predetermined end condition is satisfied. Among a plurality of evaluation values obtained during the repetition of the evaluation operation, the control parameters with which the best solution has been obtained are determined as optimized control parameters.

Citation List

Patent Literature

PTL 1: Japanese Patent No. 7105882

SUMMARY OF THE INVENTION

Because it is difficult to define the best solution in the above-described conventional system, however, there is a problem that it is difficult to determine how many times the evaluation operation should be repeated until the best solution is obtained.
The present disclosure, therefore, provides an adjustment assistance method and an adjustment assistance system capable of efficiently adjusting control parameters.
An adjustment assistance method according to an aspect of the present disclosure is an adjustment assistance method for assisting adjustment of a control parameter for controlling a drive target included in a target apparatus including a servomotor, the adjustment assistance method including (a) a step of driving the drive target under a plurality of operation conditions using the control parameter, (b) a step of calculating a plurality of evaluation values relating to performance of the target apparatus at a time when the drive target is driven under the plurality of operation conditions, (c) a step of determining a representative evaluation value from among the plurality of evaluation values, (d) a step of changing the control parameter based on the representative evaluation value, (e) a step of repeating (a) to (d) using the control parameter changed in (d), (f) a step of ending the adjustment of the control parameter on condition that the representative evaluation value has reached a target performance value, and (g) when the representative evaluation value has not reached the target performance value, a step of interrupting the adjustment of the control parameter on condition that (i) adjustment time of the control parameter has reached predetermined set time, or (ii) a number of times of change of the control parameter has reached a predetermined set number of times.
Note that these comprehensive or specific aspects may be implemented by a system, a method, an integrated circuit, a computer program, or a computer-readable storage medium such as a compact disc-read only memory (CD-ROM), or may be implemented by any combination of a system, a method, an integrated circuit, a computer program, and a storage medium.
With the adjustment assistance method and the like according to an aspect of the present disclosure, it is possible to efficiently adjust control parameters.

BRIEF DESCRIPTION OF THE DRAWINGS

Fig. 1 is a diagram illustrating an outline of an adjustment assistance system according to an exemplary embodiment.
Fig. 2 is a block diagram illustrating a functional configuration of the adjustment assistance system according to the exemplary embodiment.
Fig. 3 is a sequence diagram illustrating a flow of an overall operation of the adjustment assistance system according to the exemplary embodiment.
Fig. 4 is a flowchart illustrating a flow of adjustment of control parameters in the adjustment assistance system according to the exemplary embodiment.

Fig. 5 is a diagram illustrating an example of a plurality of adjustment target operation groups set in the adjustment assistance system according to the exemplary embodiment.

Fig. 6 is a diagram for explaining an evaluation value calculated in the adjustment assistance system according to the exemplary embodiment.

Fig. 7 is a diagram illustrating an example of an adjustment condition setting screen according to a modification of the exemplary embodiment.

DESCRIPTION OF EMBODIMENT

An exemplary embodiment will be specifically described hereinafter with reference to the drawings.

Note that the exemplary embodiment described hereinafter provides comprehensive or specific examples. Numerical values, shapes, materials, components, arrangement positions and connection modes of the components, steps, order of the steps, and the like mentioned in the following exemplary embodiment are examples, and are not intended to limit the present disclosure. Furthermore, among the components in the following exemplary embodiment, those not recited in independent claims representing the most superordinate concept will be described herein as optional components.

(Exemplary embodiment)

[1. Outline of adjustment assistance system]

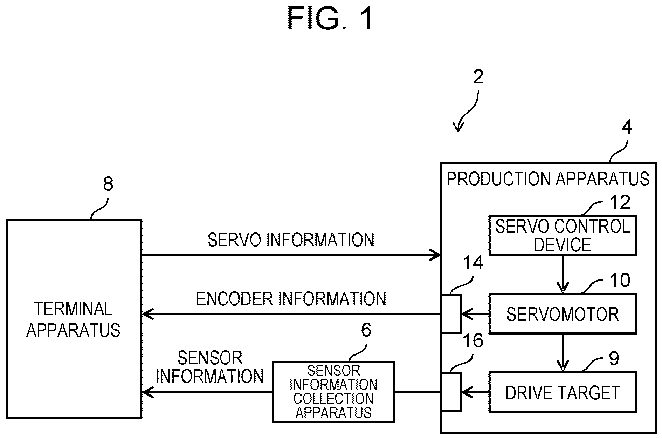

First, an outline of adjustment assistance system 2 according to an exemplary embodiment will be described with reference to Fig. 1. Fig. 1 is a diagram illustrating an outline of adjustment assistance system 2 according to the exemplary embodiment.

As illustrated in Fig. 1, adjustment assistance system 2 includes production apparatus 4 (an example of a target apparatus), sensor information collection apparatus 6, and terminal apparatus 8. Production apparatus 4, sensor information collection apparatus 6, and terminal apparatus 8 are communicably connected to each other via a communication line. The communication achieved via the communication line may be wired communication or wireless communication.

Production apparatus 4 is, for example, one of various industrial apparatuses including mounting apparatuses, processing apparatuses, and machining apparatuses installed in a factory or the like. Production apparatus 4 includes drive target 9, servomotor 10, servo control device 12, encoder 14, and sensor 16.

Drive target 9 is driven by servomotor 10. For example, when production apparatus 4 is a mounting apparatus, drive target 9 is a mover that mounts electronic components on a substrate by moving with respect to the substrate.

Servomotor 10 drives drive target 9. For example, when production apparatus 4 is a mounting apparatus, servomotor 10 moves drive target 9 with respect to the substrate.

For example, servo control device 12 is a servo amplifier. Servo control device 12 drives (controls) servomotor 10 based on servo information transmitted from terminal apparatus 8 to control the drive of drive target 9. The servo information is information including control parameters and an operation pattern. The control parameters are used for servo control device 12 to control drive target 9. The control parameters are a parameter set including a plurality of parameters, and include, for example, a position gain, a torque gain, an integral gain, and the like. The operation pattern is an operation pattern of drive target 9, and includes, for example, a travel distance, a maximum speed, acceleration time, deceleration time, and the like of drive target 9.

Encoder 14 detects displacement and the like of servomotor 10, and generates encoder information indicating the detected displacement and the like of servomotor 10. Encoder 14 transmits the generated encoder information to terminal apparatus 8.

Sensor 16 detects a position and the like of drive target 9, and generates sensor information indicating the detected position and the like of drive target 9. Sensor 16 transmits the generated sensor information to sensor information collection apparatus 6.

Sensor information collection apparatus 6 collects sensor information generated by sensor 16. Sensor information collection apparatus 6 transmits the collected sensor information to terminal apparatus 8.

Terminal apparatus 8 is, for example, a personal computer or the like installed in a factory or the like, and is operated by a user. Terminal apparatus 8 is used to adjust the above-described control parameters. Terminal apparatus 8 receives the encoder information transmitted from encoder 14 and the sensor information transmitted from sensor information collection apparatus 6. Terminal apparatus 8 adjusts the control parameters based on the received encoder information and sensor information, and transmits servo information including the adjusted control parameters to production apparatus 4.

[2. Functional configuration of adjustment assistance system]

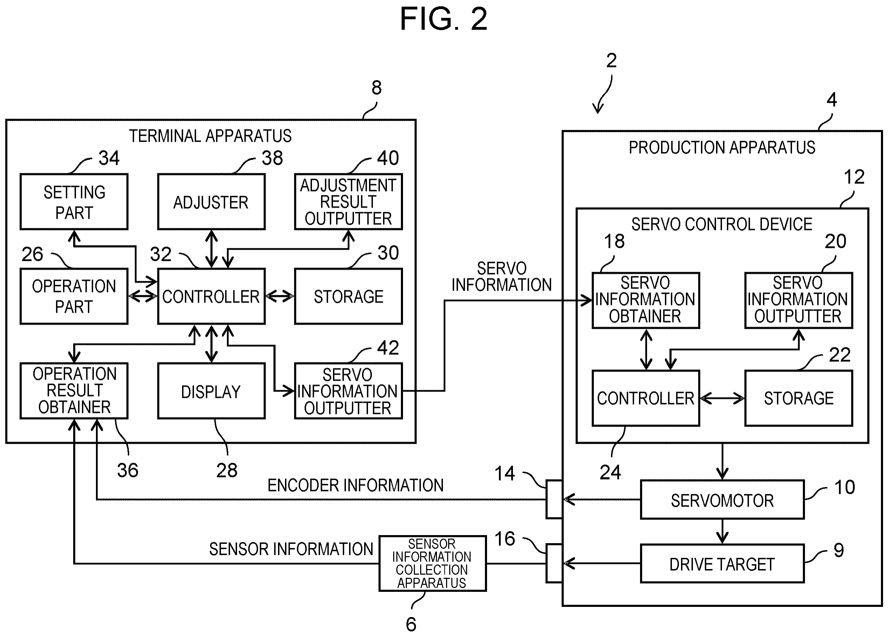

Next, a functional configuration of adjustment assistance system 2 according to the exemplary embodiment will be described with reference to Fig. 2. Fig. 2 is a block diagram illustrating a functional configuration of adjustment assistance system 2 according to the exemplary embodiment.

As illustrated in Fig. 2, servo control device 12 of production apparatus 4 includes servo information obtainer 18, servo information outputter 20, storage 22, and controller 24 as functional components.

Servo information obtainer 18 obtains (receives) servo information transmitted from terminal apparatus 8. Servo information obtainer 18 is achieved by, for example, a communication module or the like.

Servo information outputter 20 outputs the servo information obtained by servo information obtainer 18 to controller 24. Servo information outputter 20 is achieved by, for example, a communication module or the like.

Storage 22 stores various types of information, programs, and the like. Storage 22 is achieved by, for example, a memory or the like.

Controller 24 drives servomotor 10 based on the servo information output from servo information outputter 20 to control the drive of drive target 9. Controller 24 is achieved by, for example, a processor or the like. That is, various functions of servo control device 12 are executed by executing a program stored in the memory using the processor.

Furthermore, as illustrated in Fig. 2, terminal apparatus 8 includes, as functional components, operation part 26, display 28, storage 30, controller 32, setting part 34, operation result obtainer 36, adjuster 38, adjustment result outputter 40, and servo information outputter 42.

Operation part 26 receives an input from the user. Specifically, operation part 26 receives input of the target performance value, the set time, and the set number of times by the user. The target performance value is a target value of an index relating to performance (for example, settling time and vibration of drive target 9 and the like) of production apparatus 4. Note that the settling time is time required for drive target 9 to reach an allowable position, where it can be evaluated that drive target 9 has reached a target position from a drive start position. In addition, the set time is adjustment time of the control parameters input in advance by the user when the control parameters are adjusted as described later. The set number of times is the number of times of change of the control parameters input in advance by the user when the control parameters are adjusted as described later. Operation part 26 is achieved by, for example, a keyboard, a mouse, and the like.

Display 28 displays various types of information. Display 28 is achieved by, for example, a liquid crystal display.

Storage 30 stores various types of information, programs, and the like. Storage 30 is achieved by, for example, a memory or the like. Note that storage 30 may store a learned model.

Controller 32 controls entire terminal apparatus 8. Controller 32 is achieved by, for example, a processor or the like. That is, the processor executes the programs stored in the memory to execute various functions of terminal apparatus 8.

Setting part 34 sets a target performance value, set time, and the set number of times based on the user's input received by operation part 26. Setting part 34 is achieved by, for example, a processor or the like.

Operation result obtainer 36 obtains the encoder information from encoder 14 and the sensor information from sensor information collection apparatus 6. The operation result obtainer 36 then obtains a result of operation (that is, a result of operation of production apparatus 4) of drive target 9 based on at least one of the obtained encoder information and sensor information. Operation result obtainer 36 is achieved by, for example, a communication module or the like.

As will be described later, adjuster 38 sets one or more adjustment target operation groups as operation patterns of drive target 9 when adjusting the control parameters. Each adjustment target operation group includes a plurality of operation conditions. The plurality of operation conditions includes, for example, (a) an operation condition for moving drive target 9 by 1 mm from the drive start position, (b) an operation condition for moving drive target 9 by 5 mm from the drive start position, and (c) an operation condition for moving drive target 9 by 10 mm from the drive start position.

In addition, when drive target 9 is operated in one of the above-described operation patterns, adjuster 38 adjusts the control parameters based on a result of operation of drive target 9 obtained by operation result obtainer 36 (that is, based on a worst value of an evaluation value described later,). Next, when drive target 9 is operated again with the adjusted control parameter, adjuster 38 adjusts the control parameter again based on the operation result of drive target 9 obtained by operation result obtainer 36. Adjuster 38 then sequentially searches for optimal control parameters by repeatedly executing the above processing. That is, adjuster 38 executes an algorithm that solves so-called "combination optimization", where a large number of control parameters are searched for control parameters with which a desired target performance value is achieved.

Note that, instead of the above processing, adjuster 38 may adjust the control parameters based on the result of operation of drive target 9 obtained by operation result obtainer 36 using the learned model stored in storage 30 when drive target 9 is operated in one of the operation patterns described above. The learned model is constructed, for example, by performing machine learning using performance of production apparatus 4, the encoder information generated by encoder 14, and the sensor information generated by sensor 16 as training data. For construction of a logic model in machine learning, for example, a neural network or the like is used.

Adjustment result outputter 40 outputs the operation pattern set by adjuster 38 and the control parameters adjusted by adjuster 38.

Servo information outputter 42 outputs (transmits) the servo information including the operation pattern and the control parameters output from adjustment result outputter 40 to production apparatus 4.

[3. Overall operation of adjustment assistance system]

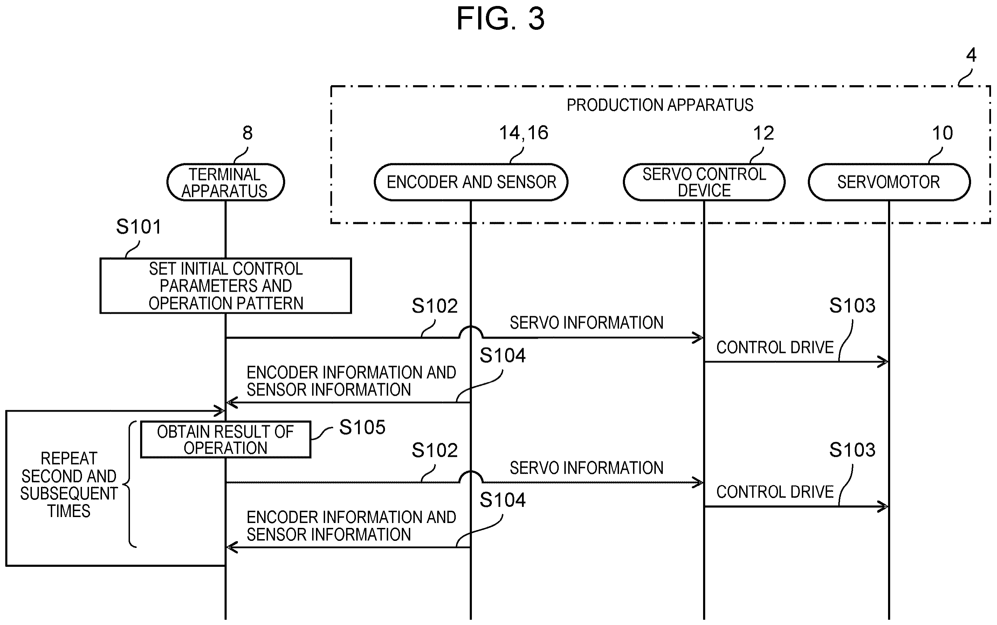

Next, overall operation of adjustment assistance system 2 according to the exemplary embodiment will be described with reference to Fig. 3. Fig. 3 is a sequence diagram illustrating a flow of the overall operation of adjustment assistance system 2 according to the exemplary embodiment.

As illustrated in FIG. 3, first, adjuster 38 of terminal apparatus 8 sets initial control parameters, and sets a first adjustment target operation group as an initial operation pattern of drive target 9 (S101). Next, servo information outputter 42 of terminal apparatus 8 outputs servo information including the initial control parameters and the operation pattern (first adjustment target operation group) set by adjuster 38 to production apparatus 4 (S102).

Next, servo information obtainer 18 of servo control device 12 of production apparatus 4 obtains the servo information from terminal apparatus 8. Servo information outputter 20 of servo control device 12 outputs the servo information obtained by servo information obtainer 18 to controller 24. Controller 24 drives (controls) servomotor 10 based on the servo information output from servo information outputter 20 to control the drive of drive target 9 (S103). The drive target 9 thus performs an operation based on the servo information using servomotor 10.

Next, operation result obtainer 36 of terminal apparatus 8 obtains encoder information transmitted from encoder 14 and sensor information transmitted from sensor 16 (that is, sensor information collection apparatus 6) (S104). Operation result obtainer 36 thus obtains a result of the operation of drive target 9 based on at least one of the obtained encoder information and sensor information (S105).

Next, adjuster 38 of terminal apparatus 8 adjusts the control parameters to sequentially search for optimal control parameters based on the result of operation of drive target 9 obtained by operation result obtainer 36. Furthermore, adjuster 38 sets a second adjustment target operation group different from the first adjustment target operation group as the operation pattern of drive target 9. Note that, instead of the above processing, adjuster 38 may use the learned model stored in storage 30 to adjust the control parameters based on the result of operation of drive target 9 obtained by operation result obtainer 36.

Next, servo information outputter 42 of terminal apparatus 8 outputs servo information including the control parameters adjusted by adjuster 38 and the operation pattern (second adjustment target operation group) set by adjuster 38 to production apparatus 4 (S102). Thereafter, similarly to the above, steps S102 to S105 are repeatedly executed.

[4. Method for adjusting control parameters]

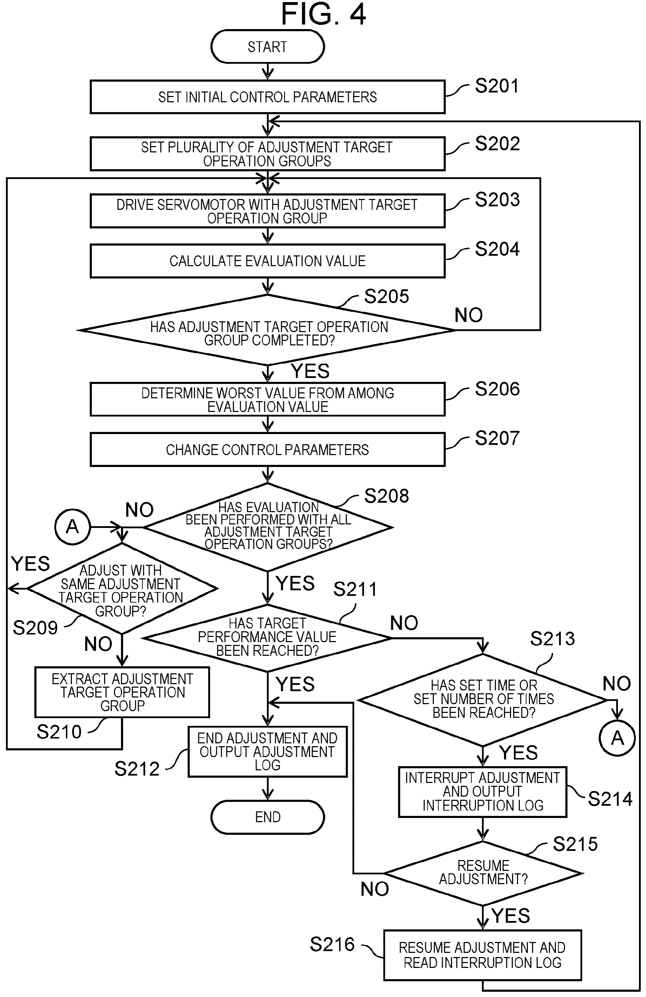

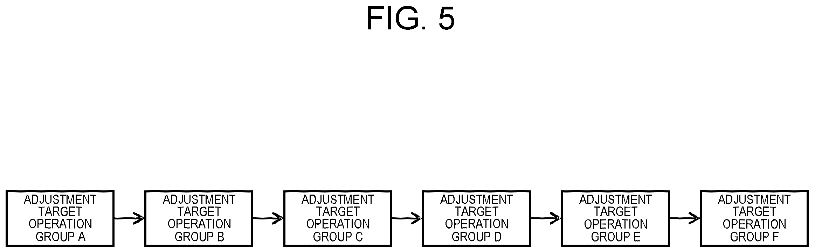

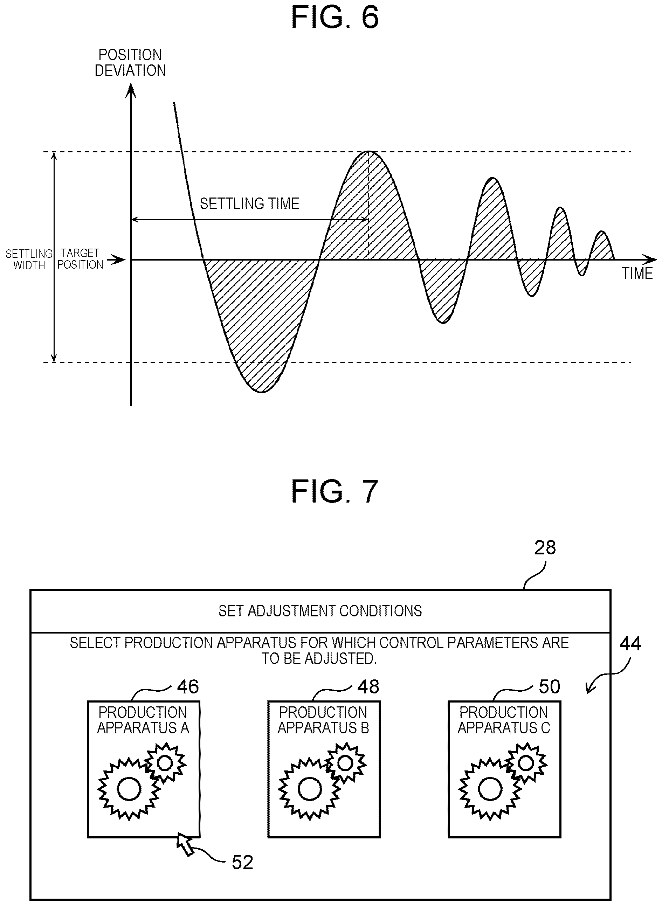

Next, a method for adjusting control parameters in adjustment assistance system 2 according to the exemplary embodiment will be described with reference to Figs. 4 to 6. Fig. 4 is a flowchart illustrating a flow of adjustment of the control parameters in adjustment assistance system 2 according to the exemplary embodiment. Fig. 5 is a diagram illustrating an example of a plurality of adjustment target operation groups set in adjustment assistance system 2 according to the exemplary embodiment. Fig. 6 is a diagram for explaining an evaluation value calculated in adjustment assistance system 2 according to the exemplary embodiment.

The user arbitrarily inputs the target performance value, the set time, and the set number of times in advance using operation part 26 of terminal apparatus 8. At this time, the user may arbitrarily input the target performance value, the set time, and the set number of times in accordance with, for example, a type of production apparatus 4. As a result, setting part 34 of terminal apparatus 8 sets the target performance value, the set time, and the set number of times based on the user's input received by operation part 26.

As illustrated in Fig. 4, adjuster 38 of terminal apparatus 8 sets initial control parameters (S201). Next, adjuster 38 sets a plurality of adjustment target operation groups different from each other (S202). For example, as illustrated in Fig. 5, setting part 34 sets a total of six adjustment target operation groups A, B, C, D, E, and F. Note that when the control parameters are adjusted, the performance of production apparatus 4 is evaluated every time drive target 9 is driven in order of adjustment target operation groups A, B, C, D, E, and F.

Next, servo information outputter 42 of terminal apparatus 8 outputs (transmits) servo information including the initial control parameters set by adjuster 38 and adjustment target operation group A to production apparatus 4. Note that adjustment target operation group A includes a plurality of operation conditions, namely, for example, a total of three operation conditions A1, A2, and A3.

Next, servo information obtainer 18 of servo control device 12 of production apparatus 4 obtains the servo information from terminal apparatus 8. Servo information outputter 20 of servo control device 12 outputs the servo information obtained by servo information obtainer 18 to controller 24. Controller 24 of servo control device 12 drives servomotor 10 based on the initial control parameters included in the servo information output from servo information outputter 20 and operation condition A1 of adjustment target operation group A to control the drive of drive target 9 (S203). Drive target 9 thus performs the operation based on the initial control parameters and operation condition A1 of adjustment target operation group A using servomotor 10. Note that operation condition A1 is an operation condition for moving drive target 9 by 1 mm from a drive start position.

Next, operation result obtainer 36 of terminal apparatus 8 obtains encoder information transmitted from encoder 14 and sensor information transmitted from sensor 16, and obtains a result of operation of drive target 9 based on at least one of the obtained encoder information and sensor information.

Next, adjuster 38 of terminal apparatus 8 calculates an evaluation value based on the result of operation of drive target 9 obtained by operation result obtainer 36 (S204). That is, adjuster 38 calculates an evaluation value (hereinafter referred to as "evaluation value A") at a time when drive target 9 is driven based on the initial control parameters and operation condition A1 of adjustment target operation group A. This evaluation value A is an index relating to the performance of production apparatus 4 at a time when drive target 9 is driven with the initial control parameters and operation condition A1 of adjustment target operation group A. Specifically, for example, when temporal changes in position deviation of drive target 9 are a waveform as illustrated in Fig. 6, adjuster 38 calculates evaluation value A based on a multiply-accumulate operation indicated by following Formula 1.

$$\text{Evaluation value A} = \alpha \times \text{settling time} + \beta \times \text{waveform area} \qquad \text{(Formula 1)}$$

In the above Formula 1, $\alpha$ and $\beta$ are weighting coefficients to be multiplied by the settling time and the waveform area (an example of a plurality of evaluation indices), respectively. In addition, the waveform area is total area of a region (hatched region in Fig. 6) defined by the waveform and a horizontal axis illustrated in Fig. 6. Note that the user may input weighting coefficients $\alpha$ and $\beta$ as desired using operation part 26 of terminal apparatus 8. For example, in a case where the user desires to further shorten the settling time of drive target 9, weighting coefficients $\alpha > \beta$ may be set, and in a case where the user desires to further reduce vibration of drive target 9, weighting coefficients $\beta > \alpha$ may be set. Alternatively, weighting coefficients $\alpha$ and $\beta$ may be automatically set by setting part 34 in accordance with the type or the like of production apparatus 4.

When all of operation conditions A1, A2, and A3 of adjustment target operation group A have not been completed (NO in S205), the process returns to step S203 described above. In this case, controller 24 of servo control device 12 controls the drive of servomotor 10 based on the initial control parameters included in the servo information output from servo information outputter 20 and operation condition A2 of adjustment target operation group A (S203). Drive target 9 thus performs the operation based on the initial control parameters and operation condition A2 of adjustment target operation group A using servomotor 10. Note that operation condition A2 is an operation condition for moving drive target 9 by 5 mm from a drive start position.

Next, operation result obtainer 36 of terminal apparatus 8 obtains encoder information transmitted from encoder 14 and sensor information transmitted from sensor 16, and obtains a result of operation of drive target 9 based on at least one of the obtained encoder information and sensor information.

Next, adjuster 38 of terminal apparatus 8 calculates an evaluation value based on the result of operation of drive target 9 obtained by operation result obtainer 36 (S204). That is, adjuster 38 calculates an evaluation value (hereinafter referred to as "evaluation value B") at a time when drive target 9 is driven based on the initial control parameters and operation condition A2 of adjustment target operation group A. This evaluation value B is an index relating to the performance of production apparatus 4 at a time when drive target 9 is driven with the initial control parameters and operation condition A2 of adjustment target operation group A. Since a method for calculating evaluation value B is similar to that of the above Formula 1, description thereof is omitted.

When all of operation conditions A1, A2, and A3 of adjustment target operation group A have not been completed (NO in S205), the process returns to step S203 described above. In this case, controller 24 of servo control device 12 drives servomotor 10 based on the initial control parameters included in the servo information output from servo information outputter 20 and operation condition A3 of adjustment target operation group A to control the drive of drive target 9 (S203). Drive target 9 thus performs the operation based on the initial control parameters and operation condition A3 of adjustment target operation group A using servomotor 10. Note that operation condition A3 is an operation condition for moving drive target 9 by 10 mm from a drive start position.

Next, operation result obtainer 36 of terminal apparatus 8 obtains encoder information transmitted from encoder 14 and sensor information transmitted from sensor 16, and obtains a result of operation of drive target 9 based on at least one of the obtained encoder information and sensor information.

Next, adjuster 38 of terminal apparatus 8 calculates an evaluation value based on the result of operation of drive target 9 obtained by operation result obtainer 36 (S204). That is, adjuster 38 calculates an evaluation value (hereinafter referred to as "evaluation value C") at a time when drive target 9 is driven based on the initial control parameters and operation condition A3 of adjustment target operation group A. This evaluation value C is an index relating to the performance of production apparatus 4 at a time when drive target 9 is driven with the initial control parameters and operation condition A3 of adjustment target operation group A. Since a method for calculating evaluation value C is similar to that of the above Formula 1, description thereof is omitted.

When all of operation conditions A1, A2, and A3 of adjustment target operation group A have been completed (YES in S205), adjuster 38 of terminal apparatus 8 determines a worst value (an example of a representative evaluation value) having the largest difference from the target performance value from among the plurality of evaluation values A, B, and C calculated as described above (S206). Note that the worst value is, for example, an evaluation value (that is, an evaluation value having the longest settling time and the largest waveform area in the above Formula 1) having the largest numerical value among evaluation values A, B, and C.

Next, adjuster 38 of terminal apparatus 8 changes (adjusts) the initial control parameters based on the worst value described above in order to sequentially search for optimum control parameters (S207). Here, storage 30 stores the number of times of change of the control parameters, and adjuster 38 increments the number of times of change of the control parameters stored in storage 30 by "1". Note that, in step S207, adjuster 38 may change the initial control parameters based on the above-described worst value using the learned model stored in the storage 30 instead of the above-described processing.

Next, when the performance of production apparatus 4 has not been evaluated based on all adjustment target operation groups A to F (NO in S208), the process proceeds to step S209. When the performance of production apparatus 4 is continuously evaluated with the same adjustment target operation group A (YES in S209), the process returns to step S203, and S203 to S208 described above are executed again.

When the performance of production apparatus 4, on the other hand, is not continuously evaluated with the same adjustment target operation group A (NO in S209), adjuster 38 of terminal apparatus 8 sets the next adjustment target operation group B (S210), and the process returns to step S203. The above-described steps S203 to S210 are then repeatedly executed until the performance of the production apparatus 4 is evaluated based on all adjustment target operation groups A to F.

In step S208, when the performance of production apparatus 4 is evaluated based on all adjustment target operation groups A to F (YES in S208), adjuster 38 of terminal apparatus 8 determines whether or not the worst value corresponding to adjustment target operation group F has reached the target performance value (that is, whether or not the worst value has become less than or equal to the numerical value indicated by the target performance value) (S211).

When the worst value has reached the target performance value (YES in S211), adjuster 38 of terminal apparatus 8 ends the adjustment of the control parameters and outputs an adjustment log (S212). Note that "ending the adjustment of the control parameters" means that the adjustment of the control parameters is completely ended on the assumption that the adjustment of the control parameter will not be resumed. Thereafter, the processing of the flowchart of Fig. 4 ends.

When the worst value has not reached the target performance value in step S211 (NO in S211), setting part 34 of terminal apparatus 8 determines whether or not adjustment time of the control parameters has reached the set time and whether or not the number of times of change of the control parameters has reached the set number of times (S213).

When the adjustment time of the control parameters has not reached the set time and the number of times of change of the control parameters has not reached the set number of times (NO in S213), the process proceeds to step S209 described above.

When the adjustment time of the control parameters has reached the set time or the number of times of change of the control parameters has reached the set number of times (YES in S213), on the other hand, adjuster 38 of terminal apparatus 8 interrupts the adjustment of the control parameters and outputs an interruption log (S214). Note that "interrupting the adjustment of the control parameters" means that the adjustment of the control parameters is temporarily ended on the assumption that the adjustment of the control parameters will be resumed.

After step S214, if the user inputs an instruction to resume the adjustment of the control parameters using operation part 26 of terminal apparatus 8 (YES in S215), adjuster 38 of terminal apparatus 8 reads the interruption log and resumes the adjustment of the control parameters (S216). Thereafter, the process proceeds to step S202 described above.

If the user does not input an instruction to resume the adjustment of the control parameters after step S214 (NO in S215), on the other hand, the process proceeds to step S212 described above.

[5. Advantageous effects]

As described above, in the present exemplary embodiment, when the worst value has reached the target performance value, adjuster 38 of terminal apparatus 8 ends the adjustment of the control parameters. In addition, when the worst value has not reached the target performance value and (i) the adjustment time of the control parameters has reached the set time or (ii) the number of times of change of the control parameters has reached the set number of times, adjuster 38 of terminal apparatus 8 interrupts the adjustment of the control parameters.

As a result, it becomes clear how long the operation for evaluating the performance of production apparatus 4 should be repeated, and the control parameters can be efficiently adjusted.

[6. Modification]

In the present exemplary embodiment, the user inputs the target performance value, the set time, and the set number of times in advance using operation part 26 of terminal apparatus 8, but for example, the following may be performed. Fig. 7 is a diagram illustrating an example of adjustment condition setting screen 44 according to a modification of the exemplary embodiment.

As illustrated in Fig. 7, display 28 of terminal apparatus 8 displays adjustment condition setting screen 44 for selecting a production apparatus for which control parameters are to be adjusted. A plurality of icons 46, 48, and 50 is displayed on adjustment condition setting screen 44. Icon 46, icon 48, and icon 50 are icons for selecting production apparatus A, production apparatus B, and production apparatus C, respectively, as a target for which control parameters to be adjusted.

For example, when the user desires to adjust the control parameters of production apparatus A, the user performs an operation for selecting icon 46 with cursor 52 on adjustment condition setting screen 44. As a result, setting part 34 of terminal apparatus 8 sets a target performance value, set time, and the set number of times corresponding to production apparatus A. That is, the target performance value, the set time, and the set number of times are set in conjunction with the operation for selecting the type of production apparatus 4 by the user.

(Other modifications)

Although the adjustment assistance system according to one or more aspects has been described above based on the above exemplary embodiment, the present disclosure is not limited to the above exemplary embodiment. Configurations in which various modifications conceived by those skilled in the art are applied to the above exemplary embodiment and configurations constructed by combining components in different exemplary embodiments may also be included in the scope of the one or more aspects without departing from the gist of the present disclosure.

Each of the components in the above exemplary embodiments may be composed of dedicated hardware, or implemented by executing a software program suitable for the component. Each component may be implemented by causing a program executer, such as a CPU or a processor, to read and execute the software program stored in a storage medium, such as a hard disk or a semiconductor memory.

Furthermore, some or all of the functions of the adjustment assistance system according to the above exemplary embodiment may be implemented by causing a processor such as a CPU to execute a program.

A subset or all of the components constituting each of the above-described apparatuses may be constituted by an IC card detachable from the apparatus or an independent module. The IC card or the module is a computer system including a microprocessor, a ROM, a RAM, and the like. The IC card or the module may include the above-described super multifunctional LSI. As the microprocessor operates in accordance with a computer program, the IC card or the module achieves a function thereof. The IC card or the module may have tamper resistance.

(Aspects)

The following aspects are disclosed by the above-described embodiment.

An adjustment assistance method according to a first aspect of the present disclosure is an adjustment assistance method according to an aspect of the present disclosure is an adjustment assistance method for assisting adjustment of a control parameter for controlling a drive target included in a target apparatus including a servomotor, the adjustment assistance method including (a) a step of driving the drive target under a plurality of operation conditions using the control parameter (S203), (b) a step of calculating a plurality of evaluation values relating to performance of the target apparatus at a time when the drive target is driven under the plurality of operation conditions (S204), (c) a step of determining a representative evaluation value from among the plurality of evaluation values (S206), (d) a step of changing the control parameter based on the representative evaluation value (S207), (e) a step of repeating (a) to (d) using the control parameter changed in (d), (f) a step of ending the adjustment of the control parameter on condition that the representative evaluation value has reached a target performance value (S212), and (g) when the representative evaluation value has not reached the target performance value, a step of interrupting the adjustment of the control parameter on condition that (i) adjustment time of the control parameter has reached predetermined set time, or (ii) a number of times of change of the control parameter has reached a predetermined set number of times (S214).

According to the present aspect, the adjustment of the control parameter is ended on condition that the representative evaluation value has reached the target performance value. In addition, when the representative evaluation value has not reached the target performance value, the adjustment of the control parameter is interrupted on condition that (i) adjustment time of the control parameter has reached predetermined set time, or (ii) the number of times of change of the control parameter has reached a predetermined set number of times. As a result, it becomes clear how long an operation for evaluating performance of the target apparatus should be repeated, and the control parameter can be efficiently adjusted.

In addition, in an adjustment assistance method according to a second aspect of the present disclosure, in the first aspect, the representative evaluation value may be a worst value having a largest difference from the target performance value among the plurality of evaluation values.

According to the present aspect, since the representative evaluation value is the worst value, it is easy to define the worst value. As a result, the worst value can be easily determined from among the plurality of evaluation values.

Furthermore, in an adjustment assistance method according to a third aspect of the present disclosure, in the first aspect or the second aspect, a user may set the target performance value, the set time, and the set number of times as desired.

According to the present aspect, for example, the target performance value, the set time, and the set number of times can be set as desired in accordance with a type or the like of target apparatus.

In addition, in an adjustment assistance method according to a fourth aspect of the present disclosure, in the first aspect or the second aspect, the target performance value, the set time, and the set number of times may be set in conjunction with an operation for selecting a type of target apparatus performed by a user.

According to the present aspect, the target performance value, the set time, and the set number of times can be easily set in conjunction with the operation for selecting the type of target apparatus performed by the user.

Furthermore, in an adjustment assistance method according to a fifth aspect of the present disclosure, in any one of the first to fourth aspects, in (b), each of the plurality of evaluation values may be calculated through a multiply-accumulate operation for multiplying a plurality of evaluation indices by a plurality of weighting coefficients.

According to the present aspect, a plurality of evaluation values can be easily calculated.

Furthermore, in an adjustment assistance method according to a sixth aspect of the present disclosure, in the fifth aspect, a user may set the plurality of weighting coefficients as desired.

According to the present aspect, for example, a plurality of weighting coefficients can be set as described in accordance with the type or the like of target apparatus.

In addition, adjustment assistance system (2) according to a seventh aspect of the present disclosure is adjustment assistance system (2) that assists adjustment of a control parameter for controlling drive target ((9) included in target apparatus (4) including servomotor (10), adjustment assistance system (2) including a processor and a memory, in which the processor is configured to (a) drive target (9) under a plurality of operation conditions using the control parameter, (b) calculate a plurality of evaluation values relating to performance of target apparatus (4) at a time when drive target (9) is driven under the plurality of operation conditions, (c) determine a representative evaluation value from among the plurality of evaluation values, (d) change the control parameter based on the representative evaluation value, (e) repeat (a) to (d) using the control parameter changed in (d), (f) end the adjustment of the control parameter on condition that the representative evaluation value has reached a target performance value, and (g) when the representative evaluation value has not reached the target performance value, interrupt the adjustment of the control parameter on condition that (i) adjustment time of the control parameter has reached predetermined set time, or (ii) a number of times of change of the control parameter has reached a predetermined set number of times.

According to the present aspect, similarly to the above, the control parameter can be efficiently adjusted.

It should be noted that these general or specific aspects may be implemented as a system, a method, an integrated circuit, a computer program, a non-transitory computer-readable storage medium such as a CD-ROM, or any selective combination thereof.

INDUSTRIAL APPLICABILITY

An adjustment assistance system according to the present disclosure is useful as, for example, a system that assists adjustment of control parameters for controlling drive of a drive target included in a production apparatus including a servomotor.

REFERENCE MARKS IN THE DRAWINGS

2: adjustment assistance system
4: production apparatus
6: sensor information collection apparatus

8: terminal apparatus
9: drive target
10: servomotor
12: servo control device
14: encoder
16: sensor
18: servo information obtainer
20, 42: servo information outputter
22, 30: storage
24, 32: controller
26: operation part
28: display
34: setting part
36: operation result obtainer
38: adjuster
40: adjustment result outputter
44: adjustment condition setting screen
46, 48, 50: icon
52: cursor

## Claims

1. An adjustment assistance method for assisting adjustment of a control parameter for controlling a drive target included in a target apparatus including a servomotor, the adjustment assistance method comprising:

   (a) a step of driving the drive target under a plurality of operation conditions using the control parameter;
   (b) a step of calculating a plurality of evaluation values relating to performance of the target apparatus at a time when the drive target is driven under the plurality of operation conditions;
   (c) a step of determining a representative evaluation value from among the plurality of evaluation values;
   (d) a step of changing the control parameter based on the representative evaluation value;
   (e) a step of repeating (a) to (d) using the control parameter changed in (d);
   (f) a step of ending the adjustment of the control parameter, when the representative evaluation value has reached a target performance value; and
   (g) a step of interrupting the adjustment of the control parameter, in a case where (i) adjustment time of the control parameter has reached predetermined set time, or (ii) a number of times of change of the control parameter has reached a predetermined set number of times, when the representative evaluation value has not reached the target performance value.

2. The adjustment assistance method according to Claim 1, wherein the representative evaluation value is a worst value having a largest difference from the target performance value among the plurality of evaluation values.

3. The adjustment assistance method according to Claim 1 or 2, wherein a user can set the target performance value, the predetermined set time, and the predetermined set number of times as desired.

4. The adjustment assistance method according to Claim 1 or 2, wherein the target performance value, the predetermined et time, and the predetermined set number of times are set in conjunction with an operation for selecting a type of target apparatus performed by a user.

5. The adjustment assistance method according to Claim 1 or 2, wherein, in (b), each of the plurality of evaluation values is calculated through a multiply-accumulate operation for multiplying a plurality of evaluation indices by a plurality of weighting coefficients.

6. The adjustment assistance method according to Claim 5, wherein a user can set the plurality of weighting coefficients as desired.

7. An adjustment assistance system that assists adjustment of a control parameter for controlling a drive target included in a target apparatus including a servomotor, the adjustment assistance system comprising:

a processor; and
a memory,
wherein the processor is configured to:

(a) drive the drive target under a plurality of operation conditions using the control parameter;

(b) calculate a plurality of evaluation values relating to performance of the target apparatus at a time when the drive target is driven under the plurality of operation conditions;

(c) determine a representative evaluation value from among the plurality of evaluation values;

(d) change the control parameter based on the representative evaluation value;

(e) repeat (a) to (d) using the control parameter changed in (d);

(f) end the adjustment of the control parameter on condition that the representative evaluation value has reached a target performance value; and

(g) when the representative evaluation value has not reached the target performance value, interrupt the adjustment of the control parameter on condition that (i) adjustment time of the control parameter has reached predetermined set time, or (ii) a number of times of change of the control parameter has reached a predetermined set number of times.

# FIG. 1

# FIG. 2

EP 4 685 583 A1

# FIG. 3

# FIG. 4

```
                    START
                      │
                      ▼
      ┌──────────────────────────────────┐
      │  SET INITIAL CONTROL PARAMETERS   │── S201
      └──────────────────────────────────┘
                      │
                      ▼
      ┌──────────────────────────────────┐
      │  SET PLURALITY OF ADJUSTMENT      │── S202
      │  TARGET OPERATION GROUPS          │
      └──────────────────────────────────┘
                      │
                      ▼
      ┌──────────────────────────────────┐
      │  DRIVE SERVOMOTOR WITH ADJUSTMENT │── S203
      │  TARGET OPERATION GROUP           │
      └──────────────────────────────────┘
                      │
                      ▼
      ┌──────────────────────────────────┐
      │  CALCULATE EVALUATION VALUE       │── S204
      └──────────────────────────────────┘
                      │
                      ▼
                    S205
      ◇ HAS ADJUSTMENT TARGET OPERATION ◇── NO
        GROUP COMPLETED?
                      │ YES
                      ▼
      ┌──────────────────────────────────┐
      │  DETERMINE WORST VALUE FROM       │── S206
      │  AMONG EVALUATION VALUE           │
      └──────────────────────────────────┘
                      │
                      ▼
      ┌──────────────────────────────────┐
      │  CHANGE CONTROL PARAMETERS        │── S207
      └──────────────────────────────────┘
                      │
                      ▼
```

Flowchart elements:

- START
- S201: SET INITIAL CONTROL PARAMETERS
- S202: SET PLURALITY OF ADJUSTMENT TARGET OPERATION GROUPS
- S203: DRIVE SERVOMOTOR WITH ADJUSTMENT TARGET OPERATION GROUP
- S204: CALCULATE EVALUATION VALUE
- S205: HAS ADJUSTMENT TARGET OPERATION GROUP COMPLETED? (NO / YES)
- S206: DETERMINE WORST VALUE FROM AMONG EVALUATION VALUE
- S207: CHANGE CONTROL PARAMETERS
- S208: HAS EVALUATION BEEN PERFORMED WITH ALL ADJUSTMENT TARGET OPERATION GROUPS? (NO → A / YES)
- S209: ADJUST WITH SAME ADJUSTMENT TARGET OPERATION GROUP? (YES / NO)
- S210: EXTRACT ADJUSTMENT TARGET OPERATION GROUP
- S211: HAS TARGET PERFORMANCE VALUE BEEN REACHED? (NO / YES)
- S212: END ADJUSTMENT AND OUTPUT ADJUSTMENT LOG
- END
- S213: HAS SET TIME OR SET NUMBER OF TIMES BEEN REACHED? (NO → A / YES)
- S214: INTERRUPT ADJUSTMENT AND OUTPUT INTERRUPTION LOG
- S215: RESUME ADJUSTMENT? (NO / YES)
- S216: RESUME ADJUSTMENT AND READ INTERRUPTION LOG

# FIG. 5

EP 4 685 583 A1

```
┌──────────────┐   ┌──────────────┐   ┌──────────────┐   ┌──────────────┐   ┌──────────────┐   ┌──────────────┐
│  ADJUSTMENT  │   │  ADJUSTMENT  │   │  ADJUSTMENT  │   │  ADJUSTMENT  │   │  ADJUSTMENT  │   │  ADJUSTMENT  │
│    TARGET    │   │    TARGET    │   │    TARGET    │   │    TARGET    │   │    TARGET    │   │    TARGET    │
│  OPERATION   │──▶│  OPERATION   │──▶│  OPERATION   │──▶│  OPERATION   │──▶│  OPERATION   │──▶│  OPERATION   │
│   GROUP A    │   │   GROUP B    │   │   GROUP C    │   │   GROUP D    │   │   GROUP E    │   │   GROUP F    │
└──────────────┘   └──────────────┘   └──────────────┘   └──────────────┘   └──────────────┘   └──────────────┘
```

# FIG. 6

# FIG. 7

**EP 4 685 583 A1**

## INTERNATIONAL SEARCH REPORT

| International application No. |
|---|
| **PCT/JP2024/006386** |

**A. CLASSIFICATION OF SUBJECT MATTER**

*G05B 13/02*(2006.01)i; *H02P 29/00*(2016.01)i
FI:   G05B13/02 A; H02P29/00

According to International Patent Classification (IPC) or to both national classification and IPC

**B. FIELDS SEARCHED**

Minimum documentation searched (classification system followed by classification symbols)

G05B13/02; H02P29/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-4080 A (FANUC CORPORATION) 09 January 2020 (2020-01-09)<br>paragraphs [0025]-[0090], fig. 1-9 | 1-7 |
| A | WO 2021/053784 A1 (MITSUBISHI ELECTRIC CORPORATION) 25 March 2021 (2021-03-25)<br>paragraphs [0014]-[0020], [0084]-[0087], [0089]-[0090], fig. 1, 6-7 | 1-7 |
| A | JP 2020-77310 A (FANUC CORPORATION) 21 May 2020 (2020-05-21)<br>all pages | 1-7 |
| A | WO 2019/244296 A1 (FUJI CORPORATION) 26 December 2019 (2019-12-26)<br>all pages | 1-7 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 May 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

18

**INTERNATIONAL SEARCH REPORT**
Information on patent family members

International application No.

**PCT/JP2024/006386**

| Patent document cited in search report | | | Publication date (day/month/year) | Patent family member(s) | | | Publication date (day/month/year) |
|---|---|---|---|---|---|---|---|
| JP | 2020-4080 | A | 09 January 2020 | US | 2020/0005499 | A1 | |
| | | | | paragraphs [0037]-[0105], fig. 1-9 | | | |
| | | | | DE | 102019209104 | A | |
| | | | | CN | 110658785 | A | |
| WO | 2021/053784 | A1 | 25 March 2021 | US | 2022/0308531 | A1 | |
| | | | | paragraphs [0029]-[0036], [0076]-[0079], [0081]-[0082], fig. 1, 6-7 | | | |
| | | | | KR | 10-2022-0044549 | A | |
| | | | | CN | 114514481 | A | |
| | | | | TW | 202113634 | A | |
| JP | 2020-77310 | A | 21 May 2020 | US | 2020/0150599 | A1 | |
| | | | | DE | 102019217130 | A | |
| | | | | CN | 111176114 | A | |
| WO | 2019/244296 | A1 | 26 December 2019 | (Family: none) | | | |

Form PCT/ISA/210 (patent family annex) (July 2022)

EP 4 685 583 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7105882 B